# EUROPEAN PATENT APPLICATION

(11) **EP 1 113 593 A1**
(43) Date of publication of application: **04.07.2001**
(21) Application number: 00942382.3
(22) Date of filing: 29.06.2000
(51) Int. Cl.: H04B 7/26, H04Q 7/38

(54) **COMMUNICATION TERMINAL AND TRANSMISSION POWER CONTROL METHOD**

(30) Priority: 09.07.1999 JP 19556299
(71) Applicant: MATSUSHITA ELECTRIC INDUSTRIAL CO., LTD., Kadoma-shi, Osaka 571-8501 (JP)
(72) Inventor: KANEMOTO, Hideki, Yokosuka-shi, Kanagawa 239-0847 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0004272
(87) International publication number: WO0105066

(57) **Abstract**

A communication terminal reduces the transmission power only when there is received transmission power control information for reduction in the transmission power from all the base stations under communication, and does not reduce the above power in other cases. And, the above terminal stores the past transmission power control information from base stations under communication. When power control information for increase in the above power from a base station is continuously stored, the above terminal follows the transmission power control information from a base station except the above station. In case of no continuous storage, the above terminal reduces the transmission power when there is transmission power control for reduction in the transmission power from all the base stations under communication, and does not perform the transmission power control for reduction in the above power, when not all the transmission power control information is the information for the reduction.

## Description

### Technical Field

The present invention relates to a communication terminal and a method for transmission power control used in a digital radio communication system.

### Background Art

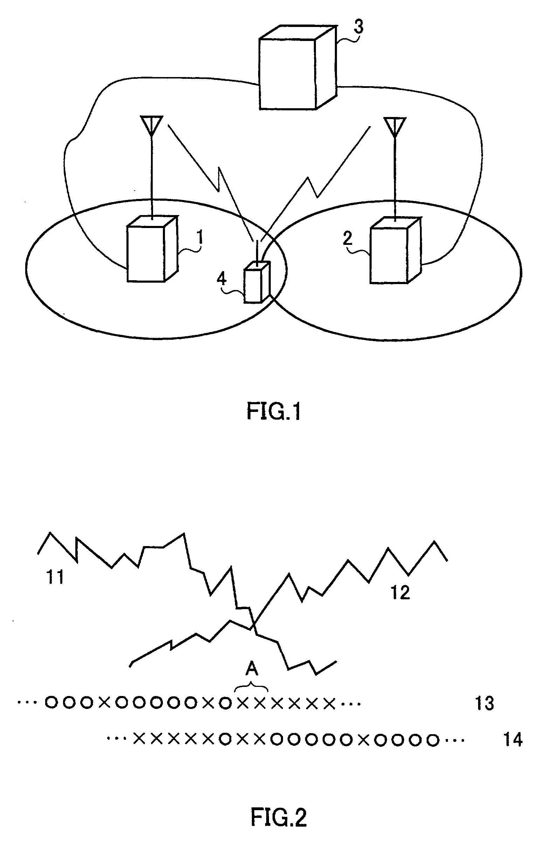

FIG. 1 shows a schematic explanation of handover for switching of a base station with which a communication terminal is communicating, in a conventional mobile radio packet communication cellular system.

A communication terminal 4 communicates with both a first and a second base stations at the time of diversity handover from a first base station 1, with which a communication terminal 4 is communicating, to a second base station for subsequent communication. At this time, a control station 3 selects a signal in a more preferable receiving state, between signals from the first and second stations, and the selected received signal is treated as a transmission signal from the communication terminal for synthesis of a received packet.

In the cellular system, transmission power control (TPC) is performed between communication terminals and base stations in order to increase the number of communication terminals accommodated by reduction in interference among communication terminals. TPC by a closed loop, in which received quality is measured at a base station; and instructions on the transmission power is given to communication terminals, based on the received quality, is usually used for transmission power control. At the time of diversity handover for a communication terminal shown in FIG. 1, transmission power control for the communication terminal is configured to be performed from both the first and the second base stations at the same time.

As the communication terminal is going away from the first base station, and approaching the second base station at the diversity handover, the received power of the transmission signal from the communication terminal gradually becomes smaller at the first base station to cause a more unfavorable state for the received power on the one hand and, the received power gradually becomes larger at the second base station to cause a more favorable state for the received power on the other hand.

Then, there may be a case where the transmission power control for the first base station and that for the second one are different each other for the communication terminal under the diversity handover. That is, the transmission power for the first base station is controlled to be increased, as the received state at the first one becomes more unfavorable, and the power for the second one is controlled to be reduced, as the received state at the second one becomes more favorable.

At the time of diversity handover, a communication terminal performs control to follow the instruction on the transmission power control to instruct smaller transmission power among one or more pieces of information on the transmission power control from a plurality of base stations under communication, in a conventional mobile radio packet communication cellular system (Japanese Patent unexamined application Hei 8-18503).

However, there may be occurred unfavorable received quality of the transmission signal from the communication terminal at a base station (the first one) which have not instructed to reduce the transmission power of the communication terminal, based on the unfavorable received state, and, moreover, even at a base station (the second one) which have instructed to reduce the transmission power of the communication terminal, based on the favorable received state, among base stations with which the communication terminal is communicating, when the transmission power of the communication terminal is controlled to be reduced in an unstable state for signal propagation at the vicinity of the cell boundary, for example, at the time of the diversity handover.

The above situations will be described, referring to FIG. 2. In FIG. 2, the solid line 11 denotes the fluctuations of the received quality for the first base station at the time of the diversity handover, and the solid one 12 those of the received one for the second station at the handover. Moreover, the symbol string 13 denotes received states of each transmission unit at the first base station, and the symbol string 14 those of each transmission unit at the second base station. In the above received states, the circle marks denote a favorable received state, and the X marks an unfavorable received state.

When conventional transmission power control is performed in a conventional manner at the time of the diversity handover, there is occurred unfavorable received quality (part A in FIG.2) of the transmission signals from the communication terminal at the first base station, which have not instructed to reduce the transmission power of the communication terminal, based on the unfavorable received state, and, at the second base station which have instructed to reduce the transmission power of the communication terminal, based on the favorable received state.

In such a case, there is a case where a packet comprising a plurality of transmission units may not be formed, even if selective synthesis of the received signals of a plurality of base station is performed at the control station for the base stations. In the above case, the packet is required to be retransmitted after all, and it may become impossible to realize efficient packet communication.

### Disclosure of Invention

The object of the present invention is to provide a communication terminal and a method for transmission power control, where it is configured that transmission signals from the above communication terminal may reach base stations with enough power, and selective synthesis of received signals may be performed well at a control station even in an unstable state for signal propagation.

The subject of the present invention is to realize efficient packet transmission, by which signals with enough power reach base stations under communication from the communication terminal, which is configured to reduce the transmission power in case of the transmission power control for reduction in the power from all the base stations under communication, and not to reduce the above power in other cases, at the time of diversity handover of the communication terminal in a packet transmission system which transmission power control is performed between the communication terminal and a plurality of base stations.

### Brief Description of Drawings

FIG. 1 shows a view of the communication terminal and base stations at diversity handover;
FIG. 2 shows a schematic view of the received quality and the received state of transmission signal from the communication terminal at each base station at the time of the diversity handover in a conventional packet communication system;
FIG. 3 shows a block diagram of a configuration of a communication terminal according to an embodiment 1 of the present invention;
FIG. 4 shows a block diagram of a configuration of a base station performing radio communication with the communication terminal according to the above embodiment;
FIG. 5 shows an explanatory flow chart of the operations of the communication terminal according to the above embodiment;
FIG. 6 shows a schematic view of the received quality and the received state of transmission signals from the communication terminal at each base station at the time of the diversity handover of the communication terminal according to the above embodiment;
FIG. 7 shows a block diagram of a configuration of a mobile station of a communication terminal according to an embodiment 2 of the present invention;
FIG. 8 shows an explanatory flow chart of the operations of the communication terminal according to the above embodiment; and
FIG. 9 shows an explanatory flow chart of the operations of the communication terminal according to the above embodiment.

### Best Mode for Carrying Out the Invention

Hereinafter, the embodiments of the present invention will be described in detail, referring to attached drawings.

### (Embodiment 1)

The present embodiment describes a case of diversity handover from the first base station, with which the communication terminal is communicating, to the second base station which will perform subsequent communication with the above terminal.

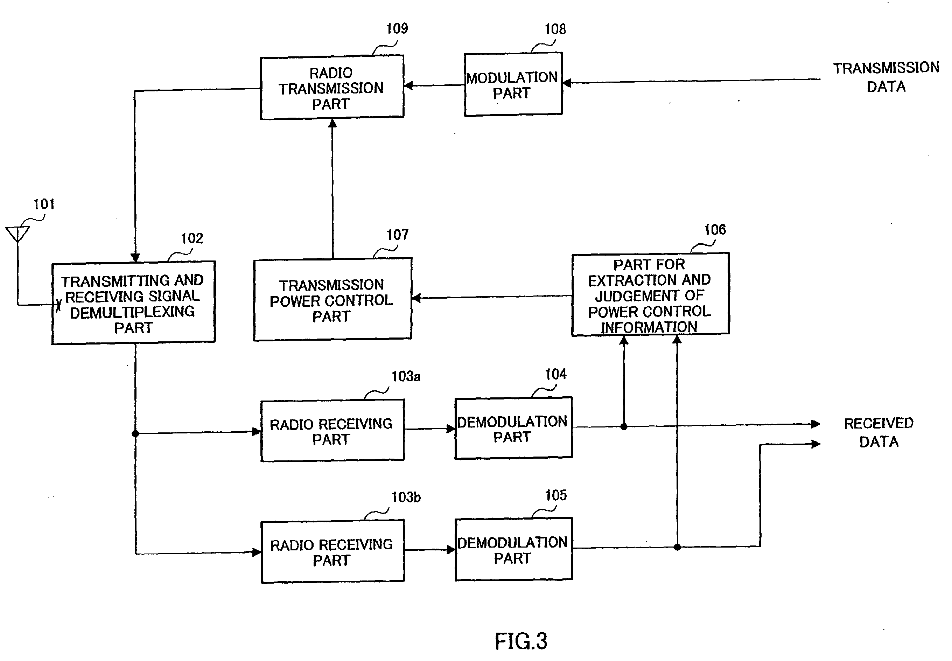

FIG. 3 shows a block diagram of a configuration of the communication terminal according to the embodiment 1 of the present invention. Signals transmitted from communication end stations are received as signals from each of the first and second base stations, respectively at a corresponding radio receiving part 103a, or 103b through an antenna 101 and a transmitting and receiving signal demultiplexing part 102. The received signals are demodulated as signals from each of the first and second base stations at a demodulation part 104, or 105 corresponding to signals from each base station, after predetermined processing for radio communication at the radio receiving part 103.

The outputs of the demodulation parts 104, and 105 become received data, and are fed to a part for extraction and judgement of power control information 106, where power control information is extracted from the demodulated data, and fed to a transmission power control part 107.

Modulated transmission data at a modulation part 108 are fed to a radio transmission part 109, where the above data become transmission signals by control of the transmission power at the transmission power control part 107, for transmission from the antenna 101 through the transmitting and receiving signal demultiplexing part 102.

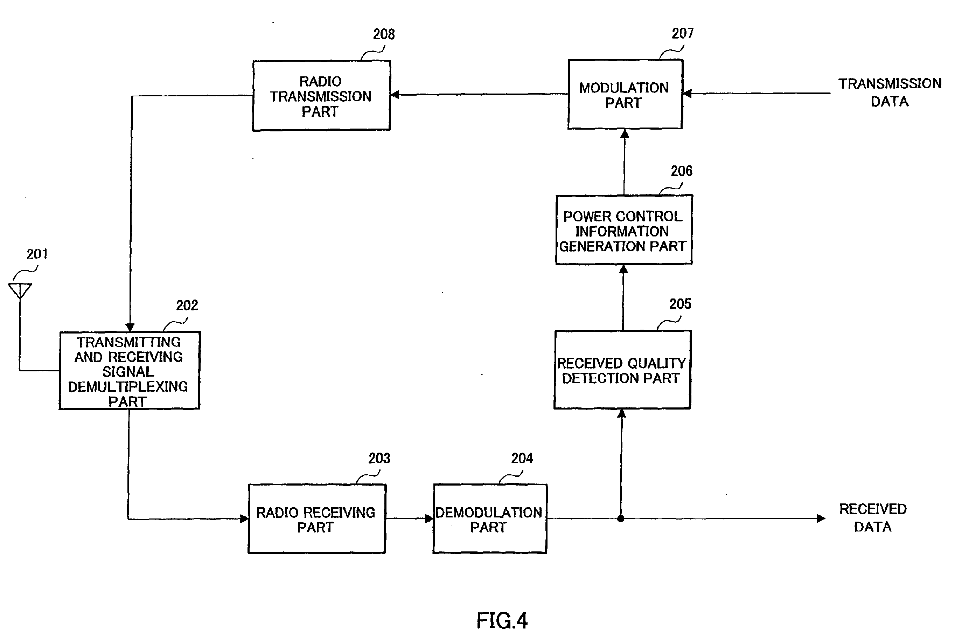

FIG. 4 shows a block diagram of a configuration of a base station performing radio communication with the communication terminal according to the embodiment 1.

The signals transmitted from the communication terminal shown in FIG. 3 are received at a radio receiving part 203 through a transmitting and receiving signal demultiplexing part 202 after passing through an antenna 201. The received signals are fed to a demodulation part 204 for demodulation, after predetermined processing for radio communication at the radio receiving part 203.

The demodulated signals are fed to a received quality detection part 205, where the received quality of the demodulated signals are detected. The detected received quality is fed to a part for generation of power control information 206.

At the part 206, transmission power control (TPC) information for increase or reduction in the power is generated based on the detected received quality. For example, control information for increase in the transmission power is generated, when the detected received quality is lower than a predetermined standard value, and the control information for reduction in the transmission power is generated, when the detected received quality is higher than the predetermined standard value.

The transmission power control information generated at the power control information generation part 206 is fed to a modulation part 207 for transmission with the transmission data. At the part 207, the transmission data and the transmission power control information are modulated and fed to a radio transmission part 208, where predetermined processing for radio communication is performed for the transmission data. The transmission signals obtained above are transmitted from the antenna 201 through the transmitting and receiving signal demultiplexing part 202.

Here, the transmission data are transmission data fed from the control station of the base station to the above terminal. And, the received data are fed to the control station of the base station, and selectively synthesized with the received signals from other base stations.

Moreover, FIG. 4 shows a modulation system and a demodulation system corresponding to one communication terminal. But, there are modulation systems and demodulation systems corresponding respectively to a plurality of communication terminals in a usual case, and each system similarly functions as described in FIG. 4.

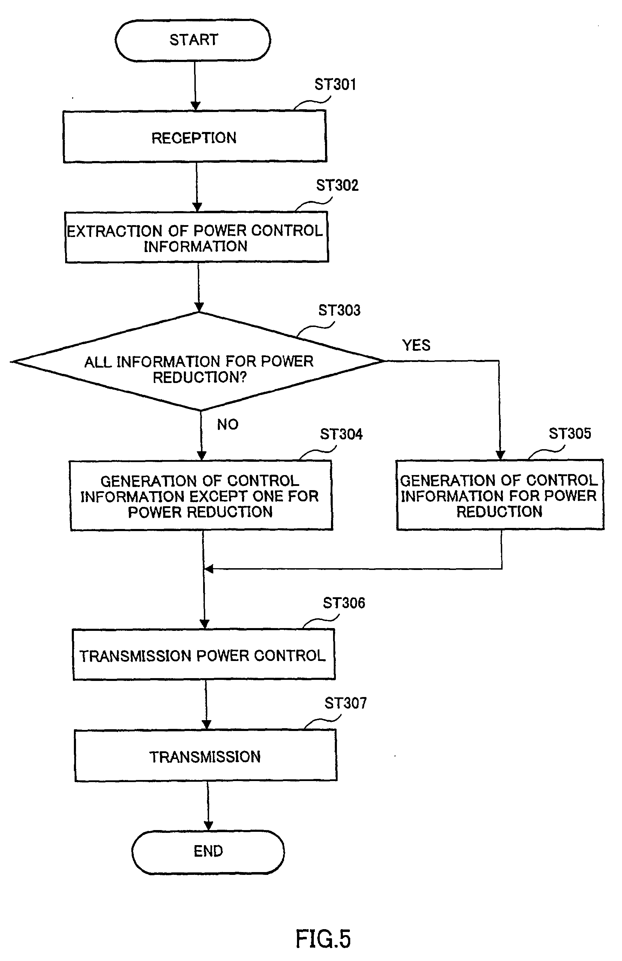

The operations of the communication terminal with the above configuration will be described, referring to FIG. 5.

Signals from the first and the second base stations are received at the communication terminal (ST301), and the received signals are demodulated respectively, and, thereafter, each of the demodulated signals is fed to a part for extraction and judgement of power control information 106, where each transmission power control information is extracted from each received signal in the first place (ST302).

The above transmission power control information has a pattern shown in Table 1 as combinations, because both the first and the second base stations have the above information, respectively.

**Table 1**

| | | | | | | |
|---|---|---|---|---|---|---|
| The first base station | Up | Down | Up | Up | Down | Eq |
| The second base station | Up | Down | Down | Eq | Eq | Eq |
| Transmission power control information | Up | Down | Up | Up | Eq | Eq |

In the above case, a control instruction signal for reduction in the transmission power (Down) is output at the part for extraction and judgement of power control information 106, as shown in Table 1, only when all the base stations, in the above case, both of the first and the second base stations feed the transmission power control information for reduction in the transmission power to the above part 106, respectively. Except the above case, the control instruction signal for reduction in the transmission power is not output at the above part, but a control instruction signal for increase in the power (Up), or the above instruction signal for no transmission power control (Eq) is output at the above part.

That is, it is judged at the part 106 whether all the transmission power control information, which are included in the signals from the base stations, are for the reduction in the transmission power (ST303). Then, when all the transmission power control information are for the above reduction, a control signal for reduction in the transmission power is generated (ST305). On the other hand, when not all the above information are for the above reduction, a control signal except the above control signal for the reduction in the transmission power is generated (ST304).

By the above judgement, the extraction and judgement of power control information 106 generates one control instruction signal and feeds it to the transmission power control part 107. The above part 107 controls the radio transmission part 109 for reduction in the transmission power (Down), for increase in the above power (Up), or for no control of the above power (Eq), according to the above control instruction signal (ST306). Thereafter, the transmission is performed under control of the transmission power (ST307).

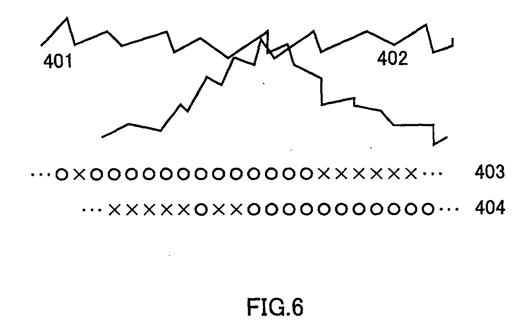

The received quality and the received states for the first and the second base stations at the time of the diversity handover under the above control of the transmission power are shown in FIG. 6. In FIG. 6, the solid line 401 denotes the fluctuations of the received quality for the first base station at the time of the diversity handover, and the solid one 402 those of the received one for the second station at the above handover. Moreover, the symbol string 403 denotes received states of each transmission unit at the first base station, and the symbol string 404 those of each transmission unit at the second base station. In the above received states, the circle marks denote a favorable received state, and the X marks an unfavorable received state.

The communication terminal is configured to increase the transmission power by the method for transmission power control according to the present embodiment, when any one of base stations with which the above terminal is communicating feeds a transmission power control signal for increase in the transmission power to the above terminal. Thereby, signals with enough signal power may reach even base stations which require larger signal power under unfavorable received state. That is, the received quality at the communication terminal may be configured to be better even in an unstable state for signal propagation. Therefore, the received states for each transmission unit under diversity handover may be improved, as shown in FIG. 6, and the case where both received states of signals from each base station at the above terminal are unfavorable may be prevented. As a result, selective synthesis may be favorably performed at the control station of the base stations.

Moreover, when all the base stations with which the communication terminal is communicating feed a transmission power control signal for reduction in the transmission power respectively, the above terminal reduces the transmission power. Thereby, interference to other communication terminals may be reduced and battery savings may be realized.

### (Embodiment 2)

The present embodiment also describes a case of diversity handover from the first base station, with which the communication terminal is communicating, to the second base station which will perform subsequent communication with the above terminal.

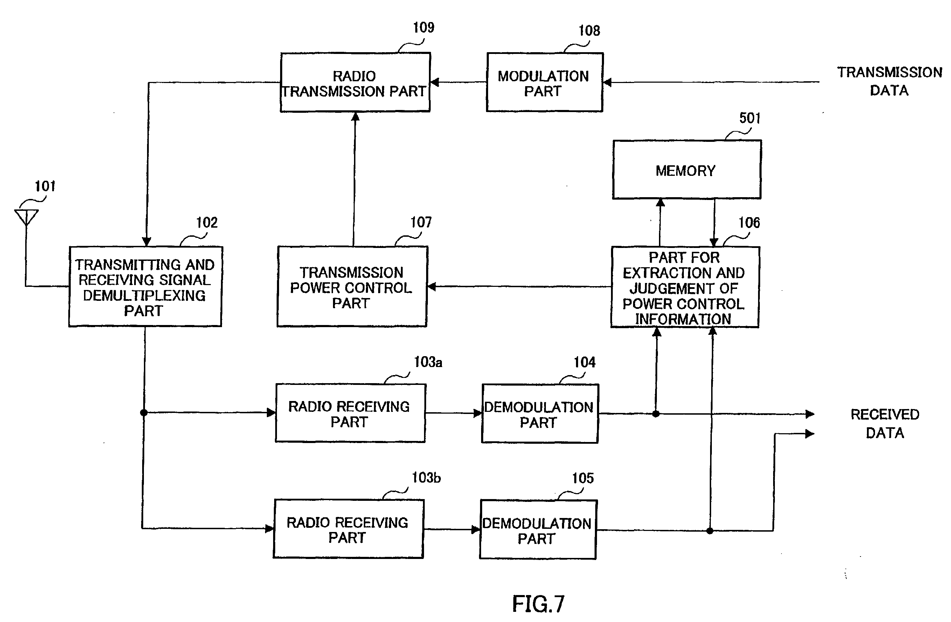

FIG. 7 shows a block diagram of a configuration of a mobile station of a communication terminal according to an embodiment 2 of the present invention. Here, parts in FIG. 7 similar to those previously described in FIG. 3 are denoted by the same reference numbers, and detailed description will be eliminated.

The communication terminal according to the present embodiment comprises a memory 501 which stores transmission power control information in the past transmission units for each base station.

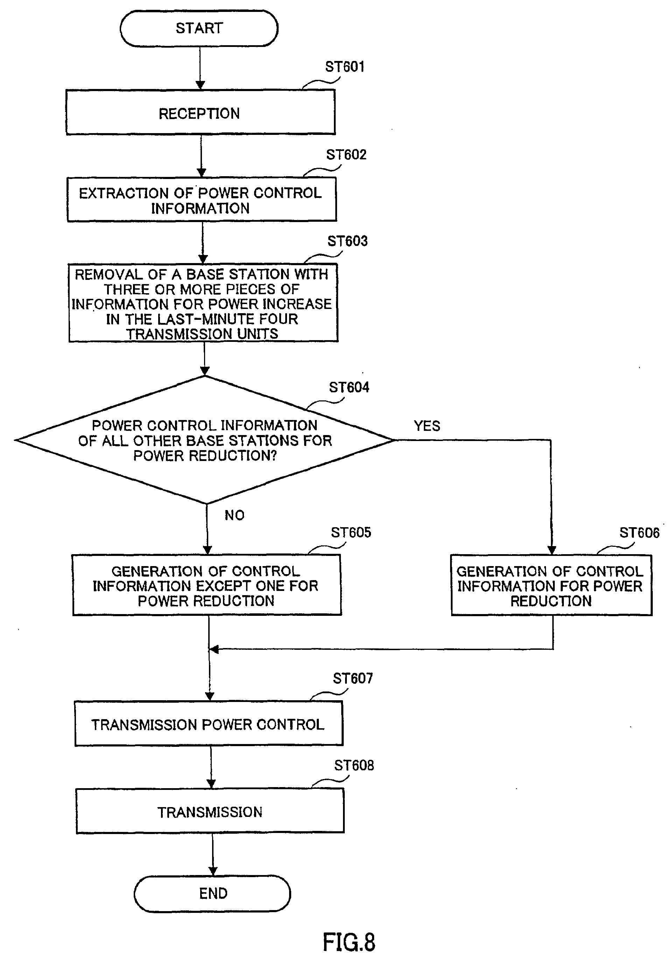

The operations of the communication terminal with the above configuration will be described, referring to FIG.8.

The communication terminal receives the signals from the first and the second base stations (ST601); the received signals are demodulated respectively; and, thereafter, each demodulated signal is fed to the part for extraction and judgement of power control information 106, where transmission power control information is extracted in the first place from the received signals (ST602), and the extracted information is stored in the memory 501.

The part 106 judges the power control information stored in the memory 501 during a certain period (a plurality of last-minute transmission units) immediately before the transmission power control by the communication terminal, and control instruction signals for the transmission power are output to the transmission power control part 107. Here, there is no special limitation in a method for deletion of the transmission power control information stored in the memory 501. For example, it may be configured that transmission power control information for predetermined number of the past transmission units is stored, and the transmission power control information may be sequentially deleted in the order of storage period, that is, from the above information for the oldest transmission unit, when transmission power control information at a new transmission unit is stored.

According to the judgment at the part for extraction and judgement of power control information 106, when a ratio of the control information, which is for increase in the transmission power, of either the first or the second base stations equal to or more than a certain specific ratio, the transmission power control information from the other base station is fed to the transmission power control part 107; and when the above ratio is not equal to or not more than the certain specific ratio, the transmission power control information is determined according to the judgment in the embodiment 1 , that is, according to the Table 1, using the transmission power control information from the first and the second base stations, and the above information is fed to the transmission power control part 107.

The situations of judgements for the power control information according to the above transmission power control are shown in the following table of Table 2. Here, it is judged that there are assumed to be large differences in the received signal quality at each base station, and the part for extraction and judgement of power control information 106 follows the transmission power control information from the other base station except the following base station, for example, when there are three pieces of control information for increase in the transmission power among the last-minute four pieces of transmission power control information at the above base station (when a ratio of the control information for increase in the transmission power is equal to or larger than a specific ratio). Moreover, it is judged that there are assumed to be small differences in the received signal quality at each base station; and the control information on the transmission power is determined according to Table 1, using the power control information from each base station, when the number of the control information for increase in the transmission power is two or less among four pieces of the last-minute control information on the transmission power at both the base stations. Here, the mark "T" in the table denotes the determination according to the Table 1.

**Table 2**

| | | | | | | | | | |
|---|---|---|---|---|---|---|---|---|---|
| The first base station | Down | Down | Down | Up | Down | Up | Up | Up | Up |
| The second base station | Up | Up | Up | Down | Down | Up | Down | Down | Down |
| Base station to be followed | 1 | 1 | 1 | 1 | T | T | 2 | 2 | 2 |
| Transmission power control information | Down | Down | Down | Up | Down | Up | Down | Down | Down |

Specifically, in the first place, the base stations with three or more pieces of information for power increase during control of the last-minute four transmission units are removed (ST603). Then, it is judged whether the power control information for all other base stations is for reduction in the transmission power (ST604). When the power control information for all other base stations is for the reduction, the transmission power control is performed according to the control information for the power reduction (ST606, ST607). On the other hand, when the power control information for all other base stations is not for the reduction, the transmission power control is performed according to the control information except one for the power reduction (ST605, ST607).

The part for extraction and judgement of power control information 106 generates one control instruction signal, and feeds it to the transmission power control part 107 by the above judgment. The radio transmission part 109 is controlled to reduce the transmission power (Down), or to increase the above power (Up) by the above control part 107, according to the control instruction signal. Then, transmission is performed under the transmission power control (ST608).

Hereinafter, the above transmission power control will be described for transmission power control of the fourth transmission unit from the left, referring to Table 2. The last-minute four pieces of transmission power control information for the first base station: Down, Down, Down, Up, and those for the second base station: Up, Up, Up, Down. Thereby, the number of control information for increase in the transmission power among four pieces of the transmission power control information is less than three for the first base station; and the above number is equal to or more than three for the second base station. In the above case, the transmission power control information (Up) for the first base station becomes the transmission power control information for the above transmission unit, as the communication terminal follows the transmission power control information for a base station except the station with three or more pieces of the control information for increase in the transmission power among four pieces of transmission power control information.

Moreover, with regard to the transmission power control of the fifth transmission unit from the left, the last-minute four pieces of transmission power control information for the first base station:Down, Down, Up, Down, and those for the second base station: Up, Up, Down, Down. Thereby, the number of control information for increase in the transmission power among four pieces of the transmission power control information is less than three for both the first and the second base stations. Therefore, the transmission power control is performed according to Table 1. That is, as the control information for both the first and the second base stations is for reduction in the transmission power, transmission power control information (Down) is the transmission power control information in the above transmission unit.

In the method for transmission power control according to the present embodiment, the communication terminal does not follow the transmission power control information from the following base station under situations where it is judged that there are big differences in the received quality of the transmission signals from the communication terminal at a plurality of base stations with which the communication terminal is communicating during diversity handover; the received signals at some base stations do not meet the standard quality; and there are many cases to generate control information which instructs the communication terminal to increase the transmission power. Thereby, it may be possible to control the transmission power, to prevent excessive quality, and to reduce interference to other communication terminals, while guaranteeing the enough received signal quality for the other base station by a configuration where signals with enough signal power reach the station.

And, under situations where there are smaller differences in the received quality of the transmission signals from the communication terminal at a plurality of base stations along with the movement of the communication terminal, and the transmission power control information becomes confused, the communication terminal feeds signals with enough signal power to both the base stations for stable radio communication by increasing the transmission power, when information for increase in the transmission power is generated even at the other base station. Thereby, the received state of the transmission units under diversity handover may be improved, and the selective synthesis may be favorably performed at the control station of the base station.

Moreover, the judgment at the part for extraction and judgement of power control information 106 may be performed in a selective synthesis unit (comprising a predetermined number of transmission units) in the present embodiment. That is, when there is no power control to follow the instruction form either of the base stations (the first or the second), or no instructions for reduction in the transmission power from all the stations in the selective synthesis unit at the control station of the base station, the power control may be switched to the one for no reduction in the transmission power (T).

In the above case, the part for extraction and judgement of power control information 106 judges the transmission power control in the current selective synthesis unit, based on the ratio of the control information, which is for increase in the transmission power, to the last-minute selective synthesis units. That is, it is judged whether the station is far away from the own station, based on the above ratio, and the transmission power control is configured to be performed, treating a base station, except one which is far away from the own station, as a master station.

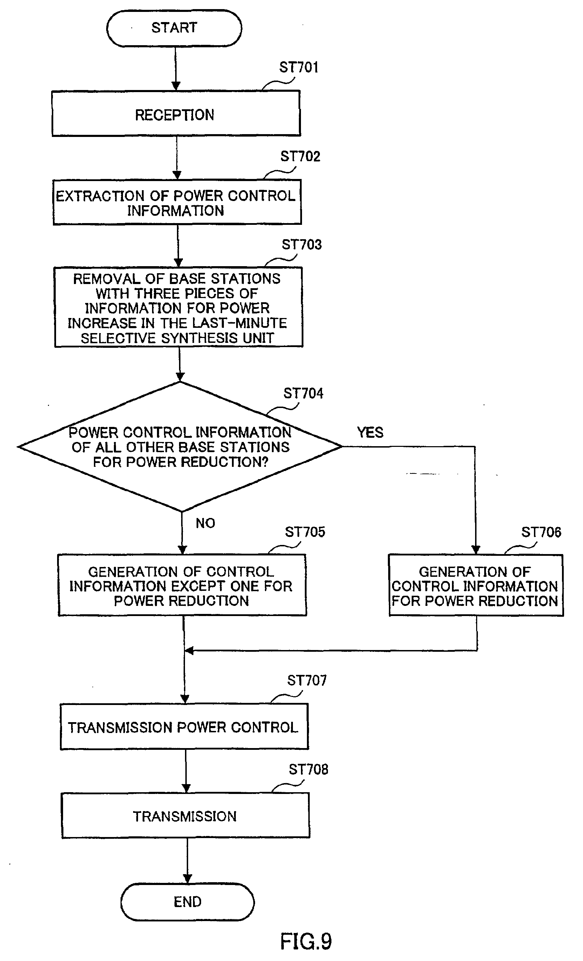

The above transmission power control during such a selective synthesis unit will be described, referring to FIG. 9. Here, the case where the selective synthesis unit comprises three transmission units is described. However, the number of transmission units forming the selective synthesis unit is not limited to three.

At the communication terminal, signals from the first and the second base stations are received (ST701), and the received signals are demodulated, respectively. Thereafter, each modulated signal is fed to the part for extraction and judgement of power control information 106, where the transmission power control information is extracted from the received signals in the first place (ST702). The part for extraction and judgement of power control information 106 stores in the memory 501 the extracted transmission power control information for each base station.

The part for extraction and judgement of power control information 106 judges the power control information, which is stored in the memory 501, in the selective synthesis unit immediately before the transmission power control by the communication terminal, and outputs the control instruction signal for the transmission power to the transmission power control part 107.

According to the judgment at the part for extraction and judgement of power control information 106, the transmission power control information from the other base station except the following base station is fed to the transmission power control part 107, when a ratio of the control information, which is for increase in the transmission power, of either the first or the second base station is equal to or more than a certain specific ratio (here, all the three transmission units forming the selective synthesis unit); and the transmission power control information is determined according to the judgment in the embodiment 1, that is, according to the Table 1, using the transmission power control information from the first and the second base stations, and the above information is fed to the transmission power control part 107, when the above ratio is not equal to or not more than the certain specific ratio.

The situations of judgements for the power control information according to the above transmission power control are shown in the following table of Table 3. Here, it is judged that there are assumed to be large differences in the received signal quality at each base station, and the part for extraction and judgement of power control information 106 follows the transmission power control information from the other base station except the following station, for example, when all the last-minute transmission power control information from the above station are the control information for increase in the transmission power (when a ratio of the control information for increase in the transmission power is equal to or larger than a specific ratio). Moreover, it is judged that there are assumed to be small differences in the received signal quality at each base station; and the control information on the transmission power is determined according to Table 1, using the power control information from each base station, when the control information for reduction in the transmission power is included in the transmission power control information during the last-minute selective synthesis unit at any base stations. Here, the mark "T" in the table denotes the determination according to the Table 1.

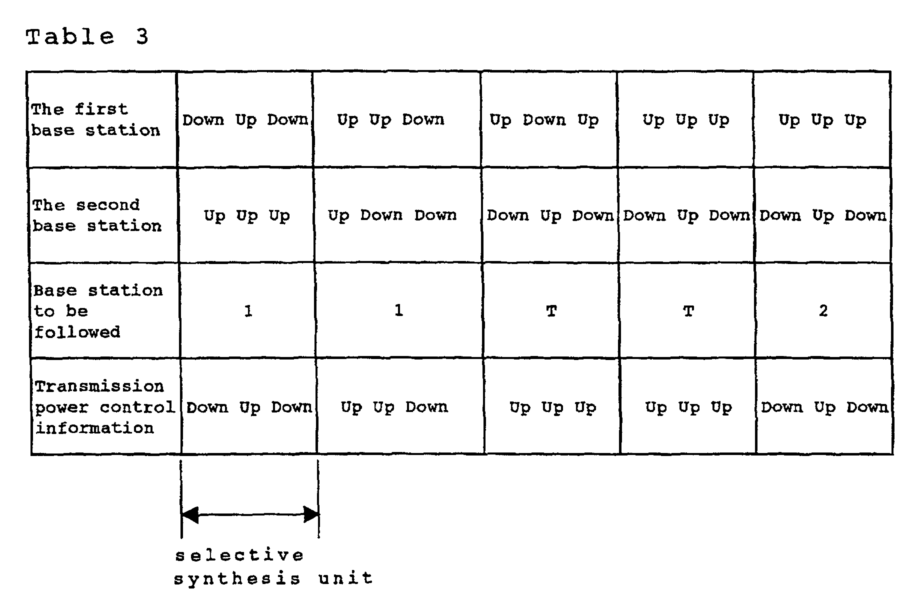

Specifically, in the first place, the base stations with three pieces of information for power increase in the last-minute transmission units are removed (ST703). Then, it is judged whether the power control information for all other base stations is for reduction in the transmission power (ST704). When the power control information for all other base stations is for the reduction, the transmission power control is performed according to the control information for the power reduction (ST706, ST707). On the other hand, when the power control information for all other base stations is not for the reduction, the transmission power control is performed according to the control information except one for the power reduction (ST705, ST707).

The part for extraction and judgement of power control information 106 generates one control instruction signal, and feeds it to the transmission power control part 107, by the above judgment. The radio transmission part 109 is controlled to reduce the transmission power (Down), or to increase the above power (Up) by the above control part 107, according to the control instruction signal. Then, transmission is performed under the transmission power control (ST708).

Hereinafter, the above transmission power control will be described for transmission power control of the first transmission unit from the left, referring to Table 3. The three pieces of transmission power control information for the first base station: Down, Up, Down, and those for the second base station: Up, Up, Up. Thereby, with regard to the second base station, all three transmission power control information are the control information for increase in the transmission power. In the above case, the transmission power control information (Down, Up, Down) for the first base station becomes the transmission power control information in the above selective synthesis unit, as the communication terminal follows the transmission power control information for a base station except the station, for which all pieces of transmission power control information in the selective synthesis unit are control information for increase in the transmission power.

And, with regard to transmission power control of the second transmission unit from the left, three pieces of transmission power control information in the last-minute selective synthesis unit for the first base station: Up, Up, Down, and those for the second base station: Up, Down, Down. Thereby, both the first and the second base stations comprise the control information for reduction in the transmission power in the selective synthesis unit. Therefore, the transmission power control is performed according to Table 1. That is, in the above selective synthesis unit, there is no control information for reduction in the transmission power of both the first and the second base stations, and, then, the transmission power control information (Up, Up, Up) is the transmission power control information in the above selective synthesis unit.

The advantages of the present embodiment may be effective in the above transmission power control. Moreover, efficient and accurate selective synthesis may be realized at the control station of the base stations by the transmission power control.

Here, starting of the diversity handover for the communication terminal is notified to the above terminal by a control signal in the above embodiments 1 and 2. Thereby, the above terminal begins to perform the above operation according to the above control signal. In a state not under the diversity handover, usual closed loop operation is performed for transmission power control.

The present invention is not limited to the above embodiments 1 and 2, that is, various kinds of variations may be possible. For example, the present invention may be applied even to a case where the number of base stations is more than three, though the above embodiments 1 and 2 are described for two base stations. And, the specific ratio of the control information for increase in the transmission power may be properly changed for execution in the embodiment 2.

Moreover, though the transmission power control information in the above embodiment 1 is assumed to be "increased" (Up), "reduced" (Down), and "unchanged" (Eq), they may be only two kinds, that is, "increased" (Up), and "reduced" (Down), like in the embodiment 2, or more than four kinds of transmission power control information. The above transmission power control information may be properly set according to the system.

The communication terminal according to the present invention has a configuration comprising: an extraction part to extract transmission power control information from signals including transmission power control information fed from a plurality of base stations; a first judgment part to generate a control signal for reduction in the transmission power, only when all pieces of transmission power control information from a plurality of base stations are control information for reduction in the transmission power; and a transmission power control part to control transmission power according to the above control signal.

According to the above configuration, signals with enough signal power may be configured to reach each base station, as the transmission power is controlled, based on transmission power control information from a plurality of base stations, in an unstable state for signal propagation at, for example, diversity handover in which the communication terminal is communicating with a plurality of base stations, and effective transmission power control is performed for a plurality of base stations.

Moreover, signals with enough signal power may reach base stations in unfavorable received state and the received state may be improved, as control for reduction in the transmission power is performed, only when all pieces of the transmission power control information, which has been received from a plurality of base stations with which the communication terminal is communicating, are information for reduction in the transmission power, though there is caused excessive quality for base stations with instruction for reduction in the transmission power in a case where base stations with instruction for reduction in the transmission power, and those with instruction for increase in the above power are mixed. Thereby, stable communication may be realized even in an unstable state for signal propagation. Therefore, efficient packet communication may be possible without loss of transmission packets, as selective synthesis of signals may be well performed in the control station of the base station.

The communication terminal according to the present invention has a configuration comprising: an extraction part to extract transmission power control information from signals including transmission power control information for each transmission unit fed from a plurality of base stations; a storage part to store the extracted transmission power control information; a second judgment part to generate a control signal for transmission power control according to transmission power control information from base stations except the following base station, when there is the above base station where a ratio of control information for increase in the transmission power to the transmission power control information in the transmission units during the past predetermined times; and a transmission power control part to control transmission power according to the above control signal.

According to the above configuration, transmission power control may be performed considering the changes in the received state of signals in, for example, diversity handover, as the transmission power control is performed, based on the past history of the transmission power control information received from a plurality of base stations with which the communication terminal is communicating, and on the currently received transmission power control information. Thereby, it may be possible to perform efficient power control; to execute the diversity handover in a reliable manner; and to carry out efficient packet communication.

The communication terminal according to the present invention has a configuration where the above second judgment part generates a control signal for reduction in the transmission power, only when all pieces of the transmission power control information from a plurality of base stations are control information for reduction in the transmission power, when any ratio of the control information for increase in the transmission power to the transmission power control information in the transmission units during the past predetermined times does not exceed a predetermined value in a plurality of the above base stations. According to the above configuration, the communication terminal does not follow the transmission power control information from the following base stations, when it is judged that there are assumed to be large differences in the received signal quality at a plurality of base stations with which the communication terminal is communicating; received signals at some base stations do not meet a standard quality; and there are many cases where the above base stations generate power control information for increase in the transmission power for the communication terminal. Thereby, it may be possible to control the transmission power, and to reduce interference to other communication terminals, while guaranteeing the enough received signal quality for the other base station by a configuration where signals with enough signal power reach the station.

And, signals with enough signal power are fed to both the base stations, and it may be possible to perform stable radio communication, as the communication terminal increase the transmission power, when information for increase in the transmission power is generated even at the other base station, under situations where there are smaller differences in the received quality of the transmission signals from the communication terminal at a plurality of base stations along with the movement of the communication terminal, and the transmission power control information becomes confused.

Similarly, the communication terminal does not follow the transmission power control information from the following base stations, when there are assumed to be large differences in the received signal quality from the communication terminal after exchanging positions of a plurality of base stations with which the communication terminal is communicating; and there are many cases where the above base stations, for which received signals do not meet a standard quality, generate power control information for increase in the transmission power for the communication terminal. Thereby, it may be possible to control the transmission power; to reduce interference to other communication terminals, while guaranteeing the enough received signal quality for the other base station; and, at the same time, to perform smooth handover in a reliable manner.

The communication terminal according to the present invention has a configuration where the above second judgment part generates a control signal for each selective synthesis comprising transmission units in predetermined times. According to the above configuration, efficient and accurate selective synthesis may be realized at the control station.

The method for transmission control according to the present invention comprises: an extraction step to extract transmission power control information from signals including transmission power control information fed from a plurality of base stations; a first judgment step to generate a control signal for reduction in the transmission power, only when all pieces of transmission power control information from a plurality of base stations are control information for reduction in the transmission power; and a transmission power control step to control transmission power according to the above control signal.

According to the above configuration, signals with enough signal power may be configured to reach each base station, as the transmission power is controlled, based on transmission power control information from a plurality of base stations, in an unstable state for signal propagation at, for example, diversity handover in which the communication terminal is communicating with a plurality of base stations, and effective transmission power control is performed for a plurality of base stations.

Moreover, control for reduction in the transmission power is performed, only when all pieces of the transmission power control information received from a plurality of base stations with which the communication terminal is communicating are information for reduction in the transmission power. Thereby, interference to other communication terminals may be reduced and battery savings may be realized. Furthermore, it may be possible to feed signals with enough signal power to base stations with unfavorable received state, and to improve the received state, as control for no reduction in the transmission power is performed except the above case. Thereby, stable communication may be realized even in an unstable state for signal propagation. Therefore, efficient packet communication may be possible without loss of transmission packets, as selective synthesis of signals may be well performed in the control station of the base station.

The method for transmission control according to the present invention comprises: an extraction step to extract transmission power control information from signals including transmission power control information fed from a plurality of base stations; a storage step to store the extracted transmission power control information; a second judgment step to generate a control signal for transmission power control according to transmission power control information from base stations except the following base station, when there is the above base station where a ratio of control information for increase in the transmission power to the transmission power control information in the transmission units during the past predetermined times in a plurality of the above base stations; and a transmission power control step to control transmission power according to the above control signal. According to the above configuration, transmission power control may be performed considering the changes in the received state of signals in, for example, diversity handover, as the transmission power control is performed, based on the past history of the transmission power control information received from a plurality of base stations with which the communication terminal is communicating, and on the currently received transmission power control information. Thereby, it may be possible to perform efficient power control; to execute the diversity handover in a reliable manner; and to carry out efficient packet communication.

The method for transmission control according to the present invention where the above second judgment step generates a control signal for reduction in the transmission power, only when all pieces of the transmission power control information from a plurality of base stations are control information for reduction in the transmission power, as any ratio of the control information for increase in the transmission power to the transmission power control information in the transmission units during the past predetermined times does not exceed a predetermined value in a plurality of the above base stations. According to the above method, the communication terminal does not follow the transmission power control information from the following base stations, when there are assumed to be large differences in the received signal quality from the communication terminal at a plurality of base stations with which the communication terminal is communicating under diversity handover; received signals at some base stations do not meet a standard quality; and there are many cases where the above base stations generate power control information for increase in the transmission power for the communication terminal. Thereby, it may be possible to control the transmission power, and to reduce interference to other communication terminals, while guaranteeing the enough received signal quality for the other base station by a configuration where signals with enough signal power reach the station.

And, signals with enough signal power are fed to both the base stations, and it may be possible to perform stable radio communication, as the communication terminal increases the transmission power, when information for increase in the transmission power is generated even at the other base station, under situations where there are smaller differences in the received quality of the transmission signals from the communication terminal at a plurality of base stations along with the movement of the communication terminal, and the transmission power control information becomes confused.

Similarly, the communication terminal does not follow the transmission power control information from the following base stations, when there are assumed to be large differences in the received signal quality from the communication terminal after exchanging positions of a plurality of base stations with which the communication terminal is communicating; and there are many cases where the above base stations, for which received signals do not meet a standard quality, generate power control information for increase in the transmission power for the communication terminal. Thereby, it may be possible to control the transmission power; to reduce interference to other communication terminals, while guaranteeing the enough received signal quality for the other base station; and, at the same time, to perform smooth handover in a reliable manner.

In the method for transmission control according to the present invention, a control signal for each selective synthesis unit comprising transmission units in the predetermined times is generated at the above second judgment step. According to the above method, efficient and accurate selective synthesis may be realized at the control station.

As described above, stable communication may be realized by the communication terminal and the method according to the present invention, as signals with enough transmission signal power are fed from mobile stations to a plurality of base stations, by transmission power control based on the transmission power control information from a plurality of base stations, in an unstable state for signal propagation at, for example, diversity handover. Moreover, efficient packet communication may be possible without loss of transmission packets, as selective synthesis of signals may be well performed in the control station of the base station.

The present application is based upon claims from the prior Japanese Patent Application Hei 11-195562, filed on July 9, 1999. The entire contents are incorporated herein by reference.

### Industrial Applicability

The present invention may be applied to a base station and a communication terminal in a digital radio communication system.

## Claims

1. A communication terminal comprising:
extraction means for extraction of transmission power control information from signals including transmission power control information transmitted from a plurality of base stations;
first judgment means for generation of a control signal for reduction in the transmission power, only when all pieces of transmission power control information from a plurality of base stations are control information for reduction in the transmission power; and
transmission power control means for control of transmission power according to said control signal.

2. A communication terminal comprising:
extraction means for extraction of transmission power control information from signals including transmission power control information for each transmission unit transmitted from a plurality of base stations;
storage means for storage of the extracted transmission power control information; second judgment means for generation of a control signal for transmission power control according to transmission power control information from base stations except the following base station, when there is said base station where a ratio of control information for increase in the transmission power to the transmission power control information in the transmission units during the past predetermined times; and
transmission power control means for control of transmission power according to said control signal.

3. A communication terminal according to claim 2, wherein said second judgment means generates a control signal for reduction in the transmission power, only when all pieces of the transmission power control information from a plurality of base stations are control information for reduction in the transmission power, as a ratio of the control information for increase in the transmission power to the transmission power control information in the transmission units during the past predetermined times does not exceed a predetermined value in a plurality of said base stations.

4. A communication terminal according to claim 2, wherein said second judgment means generates a control signal for each selective synthesis comprising transmission units in predetermined times.

5. A method for transmission control, comprising:
an extraction step to extract transmission power control information from signals including transmission power control information transmitted from a plurality of base stations;
a first judgment step to generate a control signal for reduction in the transmission power, only when all pieces of transmission power control information from a plurality of base stations are control information for reduction in the transmission power; and
a transmission power control step to control transmission power according to said control signal.

6. A method for transmission power control, comprising:
an extraction step to extract transmission power control information from signals including transmission power control information transmitted from a plurality of base stations;
a storage step to store the extracted transmission power control information; a second judgment step to generate a control signal for transmission power control according to transmission power control information from base stations except the following base station, when, in a plurality of said base stations, there is said base station where a ratio of control information for increase in the transmission power to the transmission power control information in the transmission units during the past predetermined times; and
a transmission power control step to control transmission power according to said control signal.

7. A method for transmission control according to claim 6, wherein said second judgment step generates a control signal for reduction in the transmission power, only when all pieces of the transmission power control information from a plurality of base stations are control information for reduction in the transmission power, as any ratio of the control information for increase in the transmission power to the transmission power control information in the transmission units during the past predetermined times does not exceed a predetermined value in a plurality of said base stations.

8. A the method for transmission control according to claim 6, wherein a control signal for each selective synthesis unit comprising transmission units in the predetermined times is generated at said second judgment step.
